(19) Europäisches Patentamt
European Patent Office
Office européen des brevets

(11) **EP 3 518 156 A1**

(12) **EUROPEAN PATENT APPLICATION**

(43) Date of publication:
**31.07.2019 Bulletin 2019/31**

(51) Int Cl.:
**G06Q 10/06** (2012.01)  **G06Q 50/04** (2012.01)
**G06Q 50/06** (2012.01)  G06N 3/04 (2006.01)

(21) Application number: **18153884.4**

(22) Date of filing: **29.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Siemens Aktiengesellschaft**
**80333 München (DE)**

(72) Inventors:
• **Soler Garrido, Josep**
**81547 München (DE)**
• **Krompaß, Denis**
**81549 München (DE)**
• **Fischer, Jan-Gregor**
**85604 Zorneding (DE)**

(54) **A METHOD FOR COLLABORATIVE MACHINE LEARNING OF ANALYTICAL MODELS**

(57)    A method for machine learning of analytical models, AMs, comprising core model components, CMCs, shared between tasks, t, of different customers (A, B) and comprising specialized model components, SMCs, specific to customer tasks, t, of individual customers (A, B), wherein the machine learning of the analytical models, AMs, is performed collaboratively based on local data, LD, provided by machines (3A, 3B) of the customer premises (2A, 2B) of different customers (A, B) without the local data, LD, leaving the respective customer premises (2A, 2B).

FIG 3

## Description

The invention relates to a method for performing collaborative machine learning of analytical models which can be deployed on customer computing devices of customer premises such as manufacturing plants of different customers.

Machine learning is a tool for optimization of industrial processes which can be used in a wide variety of different applications, e.g. for the optimization of machine tools, for fault detection in digital grids, for increasing an efficiency of wind turbines, for performing factory automation process monitoring, for performing analysis of sensor data or e.g. the emission reduction in gas turbines.

The development of machine learning algorithms is data driven and involves typically the creation of a parameterized data model of a system of interest, and training the data model with large amounts of process data. The data model effectively learns a behaviour of the investigated system, for example to make predictions or to optimize processes. The quality of the data models is in general directly related to an amount of data available to train the respective data models. Usually, if more data is available, the training can result in better performing data models.

Consequently, there is an interest of different customers performing similar processes to pool their data to train data models used commonly by different customers to generate data models which provide a higher performance. However, different customers performing similar processes are often competitors and have an interest in keeping their local data undisclosed and wish to keep the industrial data within its local customer premises.

Accordingly, it is an object of the present invention to provide a method for machine learning of analytical models which allows to optimize industrial processes of different customers.

This object is achieved according to a first aspect of the present by a method for machine learning of analytical models comprising the features of claim 1.

The invention provides according to the first aspect of the present invention a method for machine learning of analytical models comprising core model components shared between tasks of different customers and comprising specialized model components specific to customer tasks of individual customers, wherein the machine learning of the analytical models is performed collaboratively based on local data provided by machines of customer premises of different customers without the local data leaving the respective customer premises.

In a possible embodiment of the method for machine learning of analytical models according to the first aspect of the present invention, the analytical models specific to associated customer tasks are deployed by a third-party backend on assigned customer computing devices, in particular edge computing devices located at the customer premises of the customers and connected to processing entities, in particular machines of the respective customers which provide local data, in particular industrial data and/or machine data generated by the respective machines.

In a further possible embodiment of the method according to the first aspect of the present invention, the deployed customer task specific analytical models can be executed on the assigned customer computing devices based on the local data, in particular the local industrial data, to provide model updates of the analytical models, wherein the updated shared core model components are communicated by the customer computing devices via an interface as candidate core model components to the third-party backend.

In a further possible embodiment of the method according to the first aspect of the present invention, the third-party backend combines the communicated received candidate core model components to provide global candidate core model components.

In a further possible embodiment of the method according to the first aspect of the present invention, analytical models deployed on assigned customer computing devices of customers are replaced by candidate analytical models comprising the provided global candidate core model components if it is verified that the deployed analytical models are outperformed by the respective candidate analytical models.

In a possible embodiment of the method according to the first aspect of the present invention, the analytical models comprise neural networks including several network layers.

In a possible embodiment of the method according to the first aspect of the present invention, the core model components comprise one or more bottom layers of the neural network shared between tasks of different customers.

In a further possible embodiment of the method according to the first aspect of the present invention, the specialized model components comprise one or more top layers of the neural network specific to associated customer tasks.

In a still further possible embodiment of the method according to the first aspect of the present invention, the verification is performed by the third-party backend using available test data provided by the third party and/or provided by the customers.

In a still further possible embodiment of the method according to the first aspect of the present invention, the verification is performed by analyzing the candidate analytical models comprising the provided global candidate core model components.

In a further possible embodiment of the method according to the first aspect of the present invention, the verification is performed by testing candidate analytical models deployed on customer computing devices of customer premises.

In a possible embodiment the verification is performed in a secure computing device.

In a further possible embodiment of the method according to the first aspect of the present invention, multiple model versions of each complete analytical model comprising the core model components and comprising the specialized model components are maintained and managed at the third-party backend and/or on the customer premises of each customer.

In a possible embodiment of the method according to the first aspect of the present invention, the model versions of the analytical models comprise a production model version of the analytical model,
a local model version of the analytical model and
a global model version of the analytical model.

In a still further possible embodiment of the method according to the first aspect of the present invention, the production model version of the analytical model is executable in a production mode on process or industrial data during a production process at a customer premises.

In a further possible embodiment of the method according to the first aspect of the present invention, the local model version of the analytical model is executable in a development mode having the specialized model components specific to the associated customer tasks updated on the basis of the task specific local data and having fixed core model components.

In a still further possible embodiment of the method according to the first aspect of the present invention, the global model version of the analytical model is executable in the development mode and has specialized model components specific to the associated customer task updated on the basis of task specific local data and having core model components updated on the basis of local data throughout all compatible tasks across the customer premises of all customers.

In a further possible embodiment of the method according to the first aspect of the present invention, a performance provided by the global model version of the analytical model and a performance provided by the global model version of the analytical model are locally monitored using local test data.

In a further possible embodiment of the method according to the first aspect of the present invention, if the performance provided by the global model version of the analytical model is superior to the performance provided by the local model version of the analytical model, the core model components and the specialized model components of the local model version are replaced by the corresponding model components of the global model version of the analytical model.

In a further possible embodiment of the method according to the first aspect of the present invention, if either the performance provided by the global model version of the analytical model or the performance provided by the local model version of the analytical model is superior to the performance provided by the production model version of the analytical model, the production model version of the analytical model is replaced by the model version of the analytical model providing the best or highest performance.

In a still further possible embodiment of the method according to the first aspect of the present invention, the replacement of model versions of the analytical model is performed automatically depending on the performance provided by the model versions of the analytical model and/or depending on anonymity thresholds.

In a still further possible embodiment of the method according to the first aspect of the present invention, the tasks comprise inference tasks where the analytical model is applied to receive local data and learning tasks to improve the analytical model.

In a further possible embodiment of the method according to the first aspect of the present invention, the customer computing devices comprise edge computing devices which supply the received local data of machines and/or industrial processes located at the customer premises to a local data concentrator of the customer premises which collects and/or aggregates the local data received from the edge computing devices and forward them via a customer premises gateway to a central third-party cloud backend.

The invention further provides according to a second aspect an industrial system comprising the features of claim 17.

The invention provides according to the second aspect an industrial system comprising
customer premises of different customers,
wherein each customer premises comprises one or more machines providing local data applied to customer computing devices having deployed analytical models comprising core model components shared between tasks of different customers and comprising specialized model components specific to customer tasks of individual customers, and comprising
a third-party backend adapted to combine candidate core model components formed by updated shared core model components of the analytical models trained on local data to generate global candidate core model components, and to replace analytical models deployed on assigned customer computing devices by candidate analytical models comprising the global candidate core model components if it is verified that the deployed analytical models are outperformed by the corresponding candidate analytical models.

In the following, possible embodiments of the different aspects of the present invention are described in more detail with reference to the enclosed figures.

Fig. 1    shows a schematic diagram for illustrating the operation of a system and method according to the present invention;

Fig. 2    shows a flowchart for illustrating a possible exemplary embodiment of a method for machine learning of analytical models according to the first aspect of the present invention;

Figs. 3, 4, 5    illustrate block diagrams for explaining different steps performed by the method illustrated in Fig. 2;

Fig. 6    shows a further schematic diagram for illustrating different versions of an analytical model which can be used in a specific embodiment of the method and system according to the present invention.

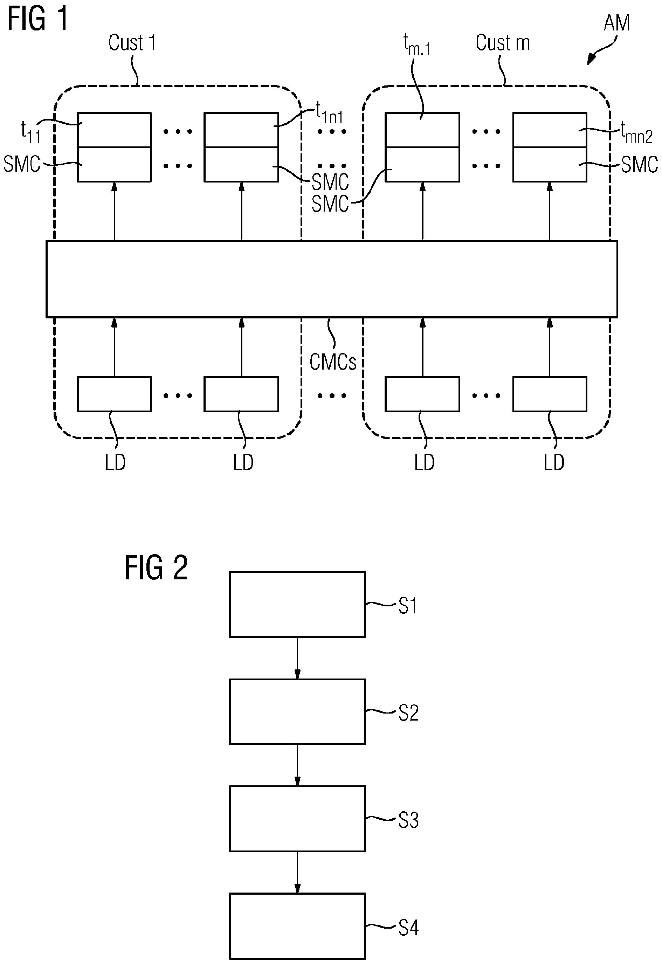

As can be seen in Fig. 1, an analytical model AM can comprise two types of model components. The analytical model AM can comprise different kinds of analytical models, for instance neural networks NN comprising several neural network layers. There is a wide variety of different data models and/or analytical models AM which can be used for a wide range of purposes and applications implemented in industrial systems. The analytical model AM illustrated in Fig. 1 comprises core model components CMCs which are shared between tasks t of different customers Cust. The analytical model AM further comprises specialized model components SMCs specific to customer tasks t of individual customers Cust. In the illustrated example of Fig. 1, there are m different customers Cust which may run different shop floors or manufacturing plants comprising each industrial devices or machines generating machine or industrial or process data as local data LD of the respective customer premises as also illustrated in Fig. 1. Each customer Cust can perform a number n of different tasks. The specialized model components SMCs of the respective analytical data model AM are specific to customer tasks t as also illustrated in Fig. 1. In the example shown in Fig. 1, the first customer premise site Cust1 of the first customer can perform n1 tasks t on the basis of local data LD of the respective customer premise site.

The analytical model AM illustrated schematically in Fig. 1 can for instance comprise a neural network NN including several neural network layers. In this case, the core model components CMCs can comprise one or more bottom layers of the neural network NN which may be shared between different tasks t of different customers Cust. The bottom layers of the neural network NN are the layers on the receiving side of the neural network NN. Further, the specialized model components SMCs can comprise one or more top layers of the neural network NN specific to associated customer tasks t and using process data provided by the one or more bottom layers of the neural network NN. The data model or analytical model AM consists of model components shared between the tasks t, i.e. core model components CMCs, and specialized model components SMCs that are specific to the task t and customer Cust, respectively.

With the method according to the present invention, the machine learning of the analytical model AM such as a neural network NN, is performed collaboratively based on local data LD provided by the machines or industrial devices at the customer premises or manufacturing plants of different customers Cust without the local data LD leaving the respective customer premises.

The shared model components, i.e. core model components CMCs, can be updated using the machine data or industrial data available throughout all compatible tasks t and customers serving the purpose of a general feature extractor beneficial across all tasks t. Compatible refers to the assumption that solving two different tasks t involves common (abstract) sub-goals. In contrast, the task and customer specific model component SMC is learned solely or exclusively from the locally available local data LD serving as a refinement module that builds on top of the globally operating core model components CMCs. The model core of the analytical model AM can consist of core model components CMCs and can have a complex structure that requires large amounts of data to be effectively trained. Given the core model, the local learning task can be dramatically reduced in complexity requiring only data models of low complexity in these specific or specialized model components SMCs and does require an order of magnitude less data to be effectively trained.

Fig. 2 shows a flowchart of a possible exemplary embodiment of a method for machine learning of analytical models AMs according to the first aspect of the present invention. In the illustrated embodiment of the method, the method comprises four main steps. In a first step S1, analytical models AMs specific to associated customer tasks t are deployed by a third-party backend 7 on assigned customer computing devices located at the customer premises of the respective customers and connected to machines or industrial devices of the respective customers which provide local data LD. The local data LD can comprise machine data generated or provided by machines connected to the customer computing devices.

In a further step S2, the deployed customer task specific analytical models AMs are executed on the assigned customer computing devices based on the local data LD to provide model updates of the analytical models AMs. The updated shared core model components CMCs are communicated as candidate core model components in step S2 to the third-party backend 7.

In a further step S3, the third-party backend 7 combines the received communicated candidate core model components to provide global candidate core model components.

In a further step S4, analytical models AMs deployed on assigned customer computing devices of customers Cust are replaced by candidate analytical models AMs comprising the provided global candidate core model components if it is verified that the deployed analytical models AMs are outperformed by the respective candidate analytical models AMs. The verification performed in step S4 can be performed in a possible embodiment by the third-party backend 7 using available test data provided by the third party or provided by the customers. The verification can be performed in a possible embodiment by analyzing the candidate analytical models AMs comprising the provided global candidate core model components. The testing can be performed in a possible embodiment by testing candidate analytical models AMs deployed on customer computing devices at different customer premises.

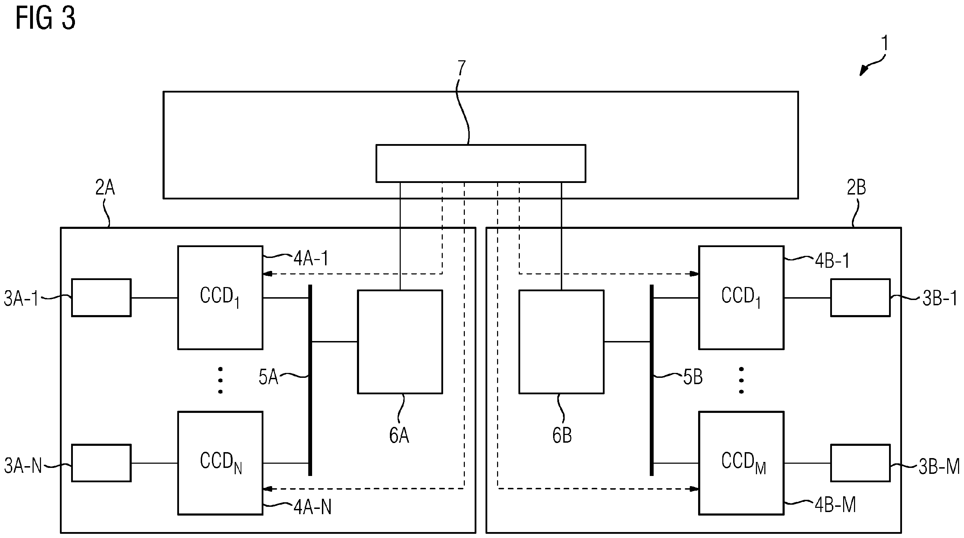

Figs. 3, 4, 5 illustrate different steps of a method for collaborative machine learning of analytical models AMs according to the first aspect of the present invention. Figs. 3, 4, 5 illustrate schematically an industrial system 1 comprising different customer premises 2A, 2B of two different customers Cust A, B. Each customer Cust premise can comprise a shop floor or manufacturing plant including a plurality of different industrial devices or machines as also illustrated in Fig. 3. In the embodiment shown in Fig. 3, the customer premise 2A of the first customer A comprises 3A-1 to 3A-N different industrial machines. The other customer premise 2B of the second customer B comprises 3B-1 to 3B-M different industrial devices or machines. Each customer premise 2A, 2B can comprise several customer computing devices (CCM), in particular edge computing devices. In the example illustrated in Fig. 3, the customer premise site 2A of the first customer A comprises N customer computing devices 4A-1 to 4A-N connected to associated industrial devices 3A-1 to 3A-N. It is also possible that several industrial devices are connected to one common customer computing device. The different customer computing devices 4A, 4B are connected via a plant network or local network 5A, 5B in the illustrated embodiment to a processing unit 6A, 6B which can be adapted to perform data aggregation or data concentration and which can serve optionally as a gateway providing an interface to a third-party backend 7 of a third trusted party being different from the customers A, B. The third-party backend 7 can be implemented in a cloud. As illustrated in Fig. 3, (dashed lines) analytical models AMs can be deployed by the third-party backend 7 into the customer computing devices CCDs, 4A, 4B on the customer premises 2A, 2B. The customer computing devices 4A, 4B of the customer premises 2A, 2B can be connected to the industrial devices 3A, 3B to receive machine or industrial data. The different customer computing devices 4A, 4B can perform inference tasks, learning tasks or both inference and learning tasks. In a learning task, an analytical model AM is applied to new received industrial data. In a learning task, the received data is used to improve the analytical model AM. The customer computing devices 4A, 4B can comprise in a possible embodiment edge computing devices. These edge computing devices can be connected to the industrial devices or machines 3A, 3B directly. Alternatively, the customer computing devices 4A, 4B can receive the machine data, i.e. the local data LD, of the industrial devices 3A, 3B via a network interface. The processing unit 6A, 6B can act as a data concentrator and collect data from many different customer computing devices 4A, 4B of the respective customer site. Further, the processing unit 6A, 6B can operate as a gateway to provide data connection to the third-party backend 7 of the industrial system 1. As illustrated in Fig. 3, the third-party backend 7 deploys in step S1 analytical models AMs on the customer computing devices 4A, 4B and/or on the processing units 6A, 6B which can be used by different tasks t of the customer premises 2A, 2B. The analytical models AMs are deployed to the customer computing devices 4A, 4B and/or processing units 6A, 6B of the customer sites 2A, 2B and are tailored specifically to individual customer tasks t. Analytical models AMs can be deployed in step S1 by the third-party backend 7 which may be installed on a server of a network cloud. The analytical models AMs are assigned to different customer computing devices 4A, 4B on the customer premises, e.g. manufacturing plant.

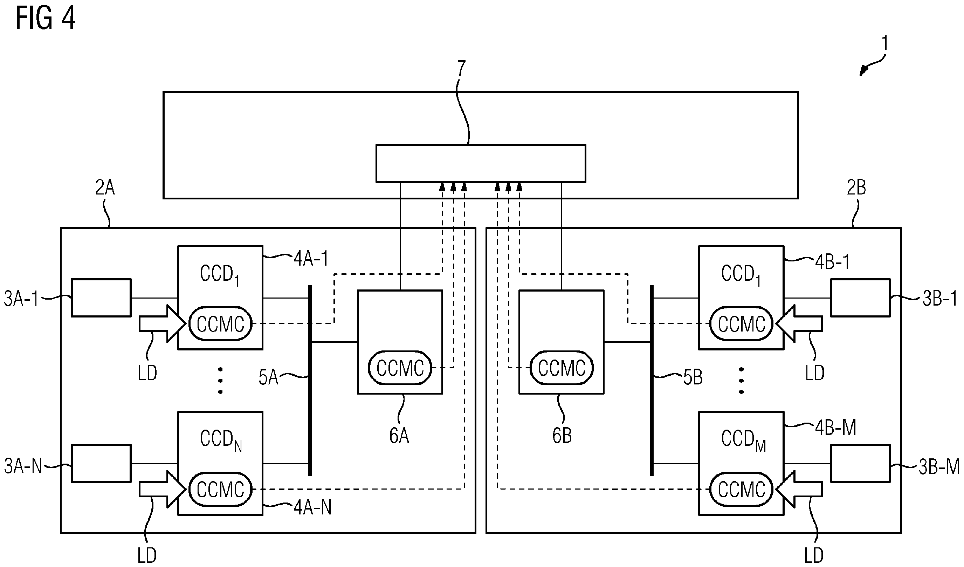

Fig. 4 illustrates a further step S2 of the method according to the first aspect of the present invention. Fig. 4 illustrates the execution and local training for a model update which takes place directly on customer premises 2A, 2B based on their own machine or industrial local data LD. The deployed customer task specific analytical models AMs are executed in step S2 on the assigned customer computing devices 4A, 4B based on the local data LD provided by the industrial devices 3A, 3B to provide model updates of the analytical models AMs. The updated shared core model components CMCs of these analytical models AMs are then communicated as candidate core model components cCMCs to the third-party backend 7 via a data interface or gateway 6A, 6B. The customer computing devices 4A, 4B apply the local analytical models AMs to their own local data LD and can perform in parallel learning tasks in order to produce model updates based on their own local data LD. The updates delivered by each customer premise 2A, 2B include at least updates to the shared core model components CMCs of the analytical model AM. In a possible embodiment, the updates delivered by each customer premise can also optionally comprise the specific specialized model components SMCs of the updated analytical model AM. The updated model components can comprise for instance weight values w of a neural network NN forming an analytical data model AM. The information or data sent to the third-party backend 7 contain at least updates for the shared core model components CMCs of the analytical model AM. In a possible embodiment, it is possible that first an aggregation of the model updates from several machines takes place before sending the updates to the third-party backend 7. Further, it is possible to perform an averaging over time after several identical manufacturing steps have been performed. The customer Cust of the customer premise site 2A, 2B can optionally apply its own privacy measures at this stage, for example add certain perturbations to the model updates.

In a further step S3, the third-party backend 7 can combine the communicated (local) candidate core model components cCMCs to provide global candidate core model components gcCMCs. A third party can replace in a step S4 analytical models AMs deployed on the assigned customer computing devices 4A, 4B of customers by candidate analytical models comprising the global candidate core model components gcCMCs if it is verified that the deployed analytical model AMs are outperformed by the respective candidate analytical models AMs. In a possible embodiment, the verification can take place in the central third-party backend 7. The verification can be performed by the third-party backend 7 using in a possible implementation available test data TD or test datasets provided by the third party itself or by using test data TD provided by the different customers A, B. Further, the third-party backend 7 can be adapted to analyze the updates themselves, i.e. performing a statistical analysis and performing a comparison between them.

In a further possible embodiment, the verification can be performed by analyzing the candidate analytical models cAMs comprising the provided global candidate core model components gcCMCs. The verification can be performed by testing in a possible embodiment candidate analytical models cAMs deployed on customer computing devices 4A, 4B of the different customer premises 2A, 2B. Optionally, the verification can be performed by securely deploying and executing partial model updates on the customer premises of third parties in order to test them. Based on the test results, the third-party backend 7 can maintain model versions for each customer task t and updates the models used in production.

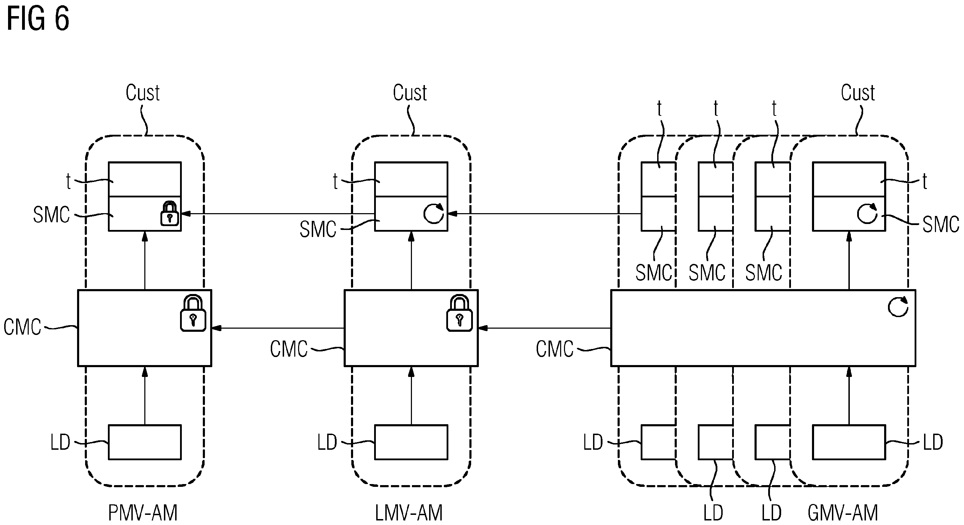

In a possible embodiment, different model versions of each complete analytical model AM are managed and maintained at the third-party backend 7 and/or on the customer premises 2A, 2B of the customers A, B. The complete analytical model AM comprises both the core model components CMCs and the specialized model components SMCs. In a possible embodiment, three different model versions of each analytical model AM are maintained and managed by the third-party backend 7 or at the customer premises 2A, 2B of the customers A, B. These model versions include a production model version PMV-AM of the analytical model AM, a local model version LMV-AM of the analytical model AM and a global model version GMV-AM of the analytical model AM. These three different model versions of the analytical model AM are also illustrated in Fig. 6.

The production model version of the analytical model PMV-AM illustrated in Fig. 6 on the left side can be executed in a production mode on industrial data LD during a production process performed at a customer premises.

The local model version of the analytical model LMV-AM illustrated in the middle of Fig. 6 is executable in a development mode. The local model version of the analytical model LMV-AM comprises specialized model components SMCs specific to the associated customer tasks t updated on the basis of the task specific local data LD and comprises fixed core model components CMCs.

The global model version of the analytical model GMV-AM is also executable in the development mode and comprises specialized model components SMCs specific to the associated customer task t updated on the basis of task specific local data LD and further comprises core model components CMCs updated on the basis of local data LD throughout all compatible tasks t across the customer premises of all customers.

In Fig. 6, the model component updates on the basis of the local data LD are illustrated. The lock symbol and the update symbol shown in Fig. 6 indicate if the respective model components gets updated by data.

The production model version of the analytical model PMV-AM (Fig. 6, left side) is solely updated by copying the local model version of the analytical model LMV-AM and not by data.

In the local model version of the analytical model LMV-AM (Fig. 6, in the center), only the task specific model components SMCs are updated from the task specific local data LD and the core model components CMCs are fixed (lock symbol).

In the global model version of the analytical model GMV-AM (Fig. 6, right side), the core model components CMCs are updated based on the data from all compatible tasks t across all customers and the task specific data is updated based on the task specific local data LD.

In case that the global model version of the analytical model GMV-AM outperforms the local model version of the analytical model LMV-AM, the local model version of the analytical model LMV-AM is replaced by the global model version of the analytical model GMV-AM. The illustrated mechanism is adapted to protect the local productive model performance on a task t at a customer Cust. In a possible embodiment, the third-party backend 7 or each customer Cust maintains a local label dataset (test dataset) of sufficient size for each task t to which neither the core model components CMCs nor the task specific model components SMCs were exposed to for training purposes. This test dataset can serve as an independent test set to approximate and to perform benchmarking of the performance provided by the different model versions on the corresponding task t.

Using this test dataset, it is possible to implement a semiautomatic or fully automatic versioning system for the core model components CMCs and the specialized model components SMCs. The update of the operating data model can be performed on demand or automatically based on the performance of the model version on the locally provided benchmark test dataset. For this purpose, the third-party backend 7 or each customer Cust can maintain three local copies or versions of the complete analytical model AM including the core model components CMCs and the specialized model components SMCs for each individual customer and each task t. These three local copies are illustrated in Fig. 6. The first local copy, i.e. the production model version of the analytical model PMV-AM, is run in a production mode during operation of the industrial system 1. The other two local copies comprising the local model version of the analytical model LMV-AM and the global model version of the analytical model GMV-AM are run in a development mode of the system. The production model version of the analytical model PMV-AM is the model operating on each local task t for each customer and its update can be scheduled on demand or automatically. The update can be scheduled on demand by either the customer itself or by the third-party backend 7. Alternatively, it is possible to schedule the update automatically, e.g. based on observed performance.

The two model versions executable in the development mode, i.e. the local model version of the analytical model LMV-AM and the global model version of the analytical model GMV-AM, do not operate on a local task t but serve as synchronization candidates for the model running during production, i.e. the production model version of the analytical model PMV-AM. For the first development analytical model, e.g. the local model version of the analytical model LMV-AM illustrated in Fig. 6 in the middle, only the specific model component SMC of the illustrated task t is updated based on the local data LD gathered from the local task t. The local model version of the analytical model LMV-AM resembles an updated model that can operate on a stable version of the core model components CMCs.

On the other hand, the second model version which can be run in the development mode, i.e. the global model version of the analytical model GMV-AM illustrated in Fig. 6 on the right side, can be completely updated, wherein the specialized model components SMCs are updated using the local data LD gathered from the local task t and the core model components CMCs are asynchronously updated based on the industrial or machine data LD of all compatible customers and tasks t as illustrated in Fig. 6. The performance of both the local and global model version of the analytical model AM (LMV-AM, GMV-AM) can be locally monitored using a local test dataset. In a possible embodiment, different update rules are implemented.

In a possible embodiment, a performance provided by the local model version of the analytical model LMV-AM and a performance provided by the global model version of the analytical model GMV-AM are locally monitored using the local test dataset. If the performance provided by the global model version of the analytical model GMV-AM is superior to the observed performance provided by the local model version of the analytical model LMV-AM, the core model components CMCs and the specialized model components SMCs of the local model version of the analytical model LMV-AM are replaced by the corresponding model components of the global model version of the analytical model GMV-AM. Accordingly, if the global model version is superior over the local model version, the core model components CMCs and the specialized model components SMCs of the local model version LMV-AM are replaced by the ones from the global model version GMV-AM as also illustrated in Fig. 6.

A further update rule is as follows. If either the performance provided by the global model version of the analytical model GMV-AM or the performance provided by the local model version of the analytical model LMV-AM is superior to the performance provided by the production model version of the analytical model PMV-AM, the production model version of the analytical model PMV-AM is replaced by the model version of the analytical model AM providing the best performance.

These updates can be executed either automatically as soon as pre-specified conditions are met (e.g. performance or anonymity thresholds) or manually by the customer or by the third party.

The management of the different model versions provided for each customer and task specific model can be performed either at the third-party backend 7 or directly on the customer premises of each customer.

If the different model versions are managed at the third-party backend 7, it is necessary that the test dataset from each customer is made available to the third-party backend 7. In this case, updates for both the shared core model components CMCs as well as the specific model components SMCs are sent by the customer premises 2A, 2B to the third-party backend 7 which implements the update rules. In this embodiment, the third-party backend 7 only needs to deliver the production model version of the analytical model PMV-AM back to each customer premises 2A, 2B after each update.

In an alternative embodiment, the management of the multiple model versions is performed directly on the premises 2A, 2B of each customer. This option can be applied when the test dataset from each customer is not available at the third-party backend 7. In this case, monitoring performance of the different model versions can be based on the test dataset and is performed directly on the customer premises. To do this, the third-party backend 7 can deploy all the management model versions for each analytical model AM to customer premises. Alternatively, these model versions may be directly generated at the customer premises. For this last alternative embodiment, customers may only send updates for the shared core model parts CMCs of the analytical model AM to the third-party backend 7, and the third-party backend 7 distributes these updates to other customers in order to allow them to independently implement the update rules on their premises.

For the different implementation options described above, the third-party backend 7 can optionally take measures to ensure that no sensitive data from any given customer is exposed to any of the other customers. Sensitive data about the processes of a customer can be contained in the model updates, i.e. specifically in the core model components CMCs that are delivered to the customers, as these are based on data received from many different customer premises.

In an alternative embodiment, the third-party backend 7 ensures anonymization of each core model component part CMC before delivering it to other customers, for example by pooling many updates from different customers together, or by performing perturbations of the updates.

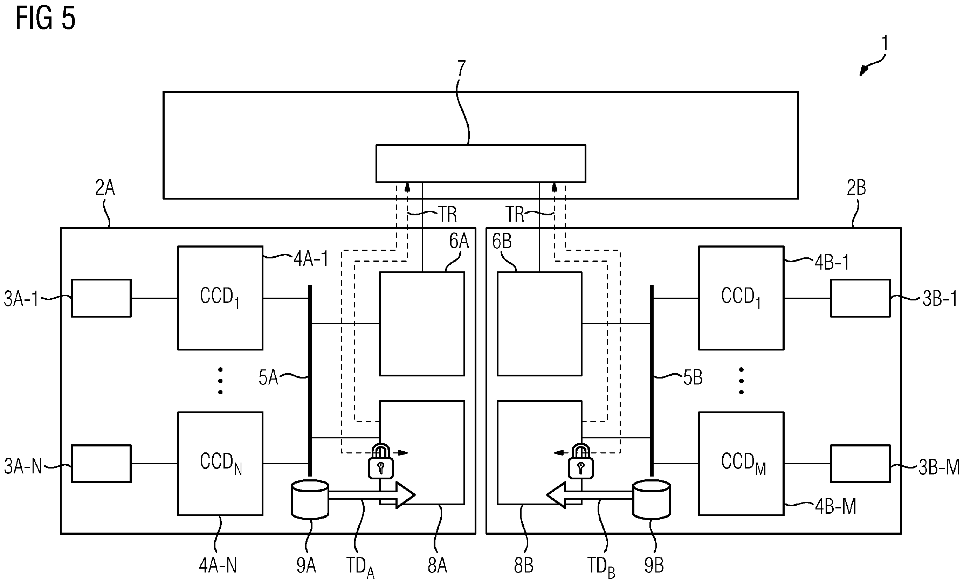

In a further alternative embodiment, the updates of the models are managed at customer premises in a secure way such that the sensitive parts of the analytical models AMs and the updates are not visible to the receiving customer. To make this possible, in a possible embodiment a secure computing element or device 8A, 8B can be operated by the third-party and deployed on the customer premises 2A, 2B, i.e. its manufacturing plant as illustrated in Fig. 5. This secure computing device 8A, 8B can provide in a possible embodiment an execution environment which is fully under the control of the third-party running the backend 7 where model updates take place. The secure computing devices 8A, 8B can be formed by conventional computing devices or in some cases requiring higher security guarantees, the secure computing devices 8A, 8B can comprise hardware security modules or any other type of tamper-proof computing devices. The secure computing devices 8A, 8B can comprise physically protected devices where all internal data is encrypted and where any attempt to physically access the secure computing devices 8A, 8B results in a destruction of the encryption keys.

In a possible embodiment, the third-party running the backend 7 is able to deploy to the secure computing device 8A, 8B encrypted and signed analytical models AMs and updates for evaluation. The third-party backend 7 can deploy directly updates of the shared core model components CMCs of the analytical models AMs from other customers, or directly entire analytical models AMs, i.e. local or global model versions of the analytical models AMs. The customer A, B can retain full control over the traffic that goes into and out to the secure computing device 8A, 8B. That is, the customer A, B controls the delivery of model updates (even if it does not have visibility over the content) and the in-feed of test data TD to the secure computing devices 8A, 8B. More importantly, a customer A, B can control the amount of traffic generated from the secure computing device 8A, 8B itself towards the third-party backend 7. This provides assurance to the customer that its own data does not leave its customer premises 2A, 2B. For example, for each analytical model AM to be tested, the secure computing device 8A, 8B may only produce a small response or test result TR containing the test set performance. It is possible to provide a generic analytical model AM performing a function f(x,w), wherein x is the input data and w comprises the model coefficients. The test performance can for example be given by a mean squared error

$$e = 1/N \sum_{i=1}^{i=N} (f(x_i, w) - y_i)^2,$$

wherein $x_i$ is the i-th test input and $y_i$ is the i-th expected output. The sum can be calculated across all N test datasets. Independent of the size of the test dataset, a small packet can be sent back as a test result TR to the third-party backend 7. The size of the messages fed back to the third-party backend 7 can provide a guarantee to the customer A, B that their test process data TD has not been leaked to the third-party backend 7, even if they are not able to see the encrypted messages. The secure third-party device 8A, 8B can perform a model update validation using supplied test data TD which may be read from a local database 9A, 9B as shown in Fig. 5.

In a possible embodiment, the secure computing devices 8A, 8B can perform the following steps.

In a first step, the secure computing device 8A, 8B receives analytical models AMs from the third-party backend 7 (including decryption and integrity verification). Alternatively, the secure computing device 8A, 8B can receive only model updates, and generate and manage multiple model versions of each analytical model AM internally based on the updates.

In a further step, the secure computing device 8A, 8B can execute the model versions on test datasets TD provided by the customer.

In a further step, the secure computing device 8A, 8B can generate responses or test results TR for the third-party backend 7 with the test performance (including encryption and signing).

In a further possible embodiment, the secure computing device 8A, 8B can perform a verification of the integrity of the test dataset TD (for example, to ensure that the same test dataset has been selected by the customer for different updates or that the update has been performed upon agreement with the third party). In a possible implementation, the verification of the integrity of the test dataset TD can include the storage of hash values for different datasets.

The method according to the first aspect of the present invention enables a collaborative development of analytical models AMs (e.g. machine learning analytical models) based on local data LD provided by many different parties, i.e. customers, hence achieving a higher performance. At the same time, the method according to the first aspect of the present invention ensures that process data LD is processed locally by each party or customer A, B without a need to share the local data LD with a third party, hence being more efficient for large data volumes and more suitable for customers with privacy concerns.

Further, the method according to the first aspect of the present invention ensures that there is no performance degradation, as multiple model versions of each analytical model AM are managed, their performance is monitored and only the best model candidates are used during operation of the industrial system 1.

Further, the method according to the present invention ensures that each customer A, B is not able to see individual model updates from other parties or customers, hence the method preserves the privacy of potentially sensitive process data or local data LD contained in the analytical models AMs.

Different distributed model training techniques are combined in the method and system 1 according to the present invention with a model verification and/or model versioning step performed by the third-party backend 7. The third-party backend 7 is able to update a part of the analytical model AM used for each individual customer on tasks t based on relevant updates provided by other customers. The verification step can be performed in different ways and may comprise the combination of different techniques such as using test data (e.g. test data belonging to the third party or test data provided by customers), analyzing of the updates (statistical analysis, comparison) or by securely deploying partial analytical model AM updates on other customer premises to implement individual model updates without exposing sensitive information or data.

With the method and system according to the present invention, it is possible to improve data analysis services provided in different applications including for instance the optimization of machine tool systems, fault detection in digital grids, wind turbine efficiency increase, factory automation process monitoring, real-time analysis of train sensor data or emission control in gas turbines. It is possible to provide improved analytical data models AMs by using a larger set of available data even from customers A, B which are not willing to share their own process data or industrial data LD, or which are concerned about privacy leaks or which fear malicious actions taken by competitors.

The model execution on the process data or industrial data LD can be performed locally on edge computing devices 4A, 4B or in a dedicated device such as a server data concentrator or gateway 6A, 6B belonging to the customer premises 2A, 2B. The process data or industrial data LD is executed in a possible embodiment on a production model version of the analytical model PMV-AM.

Model updates can be generated on the customer computing devices 4A, 4B or on separated dedicated devices or on both. For example, a concentrator or a gateway unit 6A, 6B can perform a first consolidation of customer model's updates before sending them to the third-party backend 7. In a possible embodiment, the customer premises 2A, 2B can provide a filter to perform filtering of data or to perform perturbation on model coefficients for privacy reasons at this stage.

The verification of the received model updates and the generation of updated task and customer specific models by the third-party backend 7 can take place in different ways. The verification can take place directly in the third-party backend 7 if test data is available or by securely deploying and executing partial analytical models AMs on the customer premises, for instance on a secure computing device 8A, 8B run by the third party.

In a possible embodiment, even the operational model versions of the analytical model AM can be kept and managed. In this case, model execution and learning can take place directly on the secure computing devices 8A, 8B controlled by the third party.

**Claims**

1. A method for machine learning of analytical models, AMs, comprising core model components, CMCs, shared between tasks, t, of different customers (A, B) and comprising specialized model components, SMCs, specific to customer tasks, t, of individual customers (A, B),
wherein the machine learning of the analytical models, AMs, is performed collaboratively based on local data, LD, provided by machines (3A, 3B) of the customer premises (2A, 2B) of different customers (A, B) without the local data, LD, leaving the respective customer premises (2A, 2B).

2. The method for machine learning of analytical models, AMs, according to claim 1,
the method comprising the steps of:

   (a) deploying (S1) by a third-party backend (7) analytical models, AMs, specific to associated customer tasks, t, on assigned customer computing devices, CCDs, (4A, 4B) located at the customer premises (2A, 2B) of the customer (A, B) and connected to machines (3A, 3B) of the respective customers (A, B) which provide local data, LD;
   (b) training (S2) the deployed customer task specific analytical models, AMs, executed on the assigned customer computing devices, CCDs, (4A, 4B) based on the local data, LD, to provide model updates of the analytical models, AMs, and communicating their updated shared core model components, CMCs, as candidate core model components, cCMCs, to the third-party backend (7);
   (c) combining (S3) by the third-party backend (7) the communicated candidate core model components, cCMCs, to provide global candidate core model components, gcCMCs; and
   (d) replacing (S4) analytical models, AMs, deployed on assigned customer computing devices, CCDs, (4A, 4B) of customers by candidate analytical models, cAMs, comprising the provided global candidate core model components, gcCMCs, if it is verified that the deployed analytical models, AMs, are outperformed by the respective candidate analytical models, cAMs.

3. The method according to claim 1 or 2 wherein the analytical models, AMs, comprise neural networks, NN, including several neural network layers.

**4.** The method according to claim 3 wherein the core model components, CMCs, comprise one or more bottom neural network layers of the neural network, NN, shared between tasks, t, of different customers and wherein the specialized model components, SMCs, comprise one or more top neural network layers of the neural network, NN, specific to the associated customer tasks, t.

**5.** The method according to any of the preceding claims 1 to 4 wherein the verification is performed by the third-party backend (7) using available test data (TD) provided by the third party and/or provided by the customers.

**6.** The method according to any of the preceding claims 1 to 5 wherein the verification is performed by analyzing the candidate analytical models, cAMs, comprising the provided global candidate core model components, gcCMCs.

**7.** The method according to any of the preceding claims 1 to 6 wherein the verification is performed by testing candidate analytical models, cAMs, deployed on customer computing devices, CCDs, (4A, 4B) of customer premises (2A, 2B).

**8.** The method according to any of the preceding claims 1 to 7, wherein the verification is performed on customer premises (2A, 2B) in a secure computing device (8A, 8B).

**9.** The method according to any of the preceding claims 1 to 8 wherein multiple model versions of each complete analytical model, AM, comprising the core model components, CMCs, and comprising the specialized model components, SMCs, are maintained and managed at the third-party backend (7) and/or on the customer premises (2A, 2B) of each customer.

**10.** The method according to claim 9 wherein the model versions of the analytical models, AM, comprise

- a production model version (PMV-AM) of the analytical model, AM, executable in a production mode on process data during a production process at a customer premises,
- a local model version (LMV-AM) of the analytical model, AM, executable in a development mode having the specialized model components, SMCs, specific to the associated customer tasks, t, updated on the basis of the task-specific local data, LD, and having fixed core model components, CMCs,
- a global model version (GMV-AM) of the analytical model, AM, executable in the development mode and having specialized model components, SMCs, specific to the associated customer tasks, t, updated on the basis of task specific local data, LD, and having core model components, CMCs, updated on the basis of local data, LD, throughout all compatible tasks, t, across the customer premises of all customers.

**11.** The method according to claim 10 wherein a performance provided by the local model version (LMV-AM) of the analytical model, AM, and a performance provided by the global model version (GMV-AM) of the analytical model, AM, are locally monitored using local test data.

**12.** The method according to claim 11 wherein if the performance provided by the global model version of the analytical model (GMV-AM) is superior to the performance provided by the local model version of the analytical model (LMV-AM), the core model components, CMCs, and the specialized model components, SMCs, of the local model version (LMV-AM) are replaced by the corresponding model components of the global model version of the analytical model (GMV-AM).

**13.** The method according to claim 11 or 12 wherein if either the performance provided by the global model version of the analytical model (GMV-AM) or the performance provided by the local model version of the analytical model (LMV-AM) is superior to the performance provided by the executed production model version of the analytical model (PMV-AM), the production model version of the analytical model (PMV-AM) is replaced by the model version of the analytical model, AM, providing the best performance.

**14.** The method according to any of the preceding claims 1 to 13 wherein the replacement of model versions of the analytical model, AM, is performed automatically depending on the performance provided by the model versions of the analytical model, AM, and/or depending on anonymity thresholds.

**15.** The method according to any of the preceding claims 1 to 14 wherein the tasks, t, comprise inference tasks wherein the analytical model, AM, is applied to receive local data, LD, and learning tasks to improve the analytical model, AM.

**16.** The method according to any of the preceding claims 1 to 15 wherein the customer computing devices (4A, 4B) comprise edge computing devices supplying received local data, LD, of machines located at the customer premises (2A, 2B) to a data concentrator of the customer premises (2A, 2B) which collects and/or aggregates the local data, LD, received from different customer computing devices (4A, 4B) to forward them by a customer premises gateway (6A, 6B) to a central third party cloud backend (7).

**17.** An industrial system (1) comprising

- customer premises (2A, 2B) of different customers (A, B), wherein each customer premises (2A, 2B) comprises one or more machines (3A, 3B) providing local data, LD, to customer computing devices (4A, 4B) having deployed analytical models, AMs, comprising core model components, CMCs, shared between tasks, t, of different customers and specialized model components, SMCs, specific to customer tasks, t, of individual customers; and

- a third-party backend (7) adapted to combine candidate core model components, cCMCs, formed by updated shared core model components, CMCs, of the analytical models, AMs, trained on local data, LD, to generate global candidate core model components, gcCMCs, and to replace analytical models, AMs, deployed on assigned customer computing devices (4A, 4B) by candidate analytical models, cAMs, comprising the generated global candidate core model components, gCMCs, if it is verified that the deployed analytical models, AMs, are outperformed by the corresponding candidate analytical models, cAMs.

FIG 1

FIG 2

FIG 3

FIG 4

# FIG 5

EP 3 518 156 A1

EP 3 518 156 A1

# FIG 6

Europäisches
Patentamt

European
Patent Office

Office européen
des brevets

# EUROPEAN SEARCH REPORT

Application Number

EP 18 15 3884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/330291 A1 (ASENJO JUAN L [US] ET AL) 10 November 2016 (2016-11-10) * paragraphs [0003] - [0007], [0010] - [0012], [0050] - [0075], [0088] - [0121]; figures * | 1-17 | INV. G06Q10/06 G06Q50/04 G06Q50/06 ADD. G06N3/04 |
| X | US 9 563 854 B2 (CISCO TECH INC [US]) 7 February 2017 (2017-02-07) * column 2, lines 34-57 * * column 13, line 4 - column 18, line 35; figures * | 1-17 | |
| X | US 2017/116520 A1 (MIN RENQIANG [US] ET AL) 27 April 2017 (2017-04-27) * paragraphs [0005] - [0011], [0029] - [0040]; figures * | 1-17 | |
| X | US 2015/324688 A1 (WIERZYNSKI CASIMIR MATTHEW [US] ET AL) 12 November 2015 (2015-11-12) * paragraphs [0074] - [0114], [0119] - [0126], [0142] - [0172]; figures * | 1-17 | |
| X | US 2016/267380 A1 (GEMELLO ROBERTO [IT] ET AL) 15 September 2016 (2016-09-15) * the whole document * | 1-17 | TECHNICAL FIELDS SEARCHED (IPC) G06Q G06N |
| A | US 2015/324690 A1 (CHILIMBI TRISHUL A [US] ET AL) 12 November 2015 (2015-11-12) * the whole document * | 1-17 | |

The present search report has been drawn up for all claims

| Place of search | Date of completion of the search | Examiner |
|---|---|---|
| Munich | 20 June 2018 | Blackley, William |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 3884

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2018

| Patent document cited in search report | | Publication date | Patent family member(s) | | Publication date |
|---|---|---|---|---|---|
| US 2016330291 | A1 | 10-11-2016 | CN | 104142662 A | 12-11-2014 |
| | | | EP | 2801935 A1 | 12-11-2014 |
| | | | US | 2014337429 A1 | 13-11-2014 |
| | | | US | 2016330291 A1 | 10-11-2016 |
| US 9563854 | B2 | 07-02-2017 | EP | 3092776 A1 | 16-11-2016 |
| | | | US | 2015193695 A1 | 09-07-2015 |
| | | | WO | 2015103514 A1 | 09-07-2015 |
| US 2017116520 | A1 | 27-04-2017 | NONE | | |
| US 2015324688 | A1 | 12-11-2015 | CN | 106462797 A | 22-02-2017 |
| | | | CN | 106575377 A | 19-04-2017 |
| | | | EP | 3143560 A1 | 22-03-2017 |
| | | | EP | 3143561 A1 | 22-03-2017 |
| | | | JP | 2017520824 A | 27-07-2017 |
| | | | JP | 2017520825 A | 27-07-2017 |
| | | | KR | 20170008747 A | 24-01-2017 |
| | | | KR | 20170008748 A | 24-01-2017 |
| | | | US | 2015324688 A1 | 12-11-2015 |
| | | | US | 2015324689 A1 | 12-11-2015 |
| | | | WO | 2015175154 A1 | 19-11-2015 |
| | | | WO | 2015175156 A1 | 19-11-2015 |
| US 2016267380 | A1 | 15-09-2016 | NONE | | |
| US 2015324690 | A1 | 12-11-2015 | NONE | | |

EPO FORM P0459

For more details about this annex : see Official Journal of the European Patent Office, No. 12/82